# EUROPÄISCHE PATENTSCHRIFT

(11) **EP 3 204 759 B1**
(45) Veröffentlichungstag und Bekanntmachung des Hinweises auf die Patenterteilung: **15.07.2020**
(21) Anmeldenummer: 15756882.5
(22) Anmeldetag: 21.08.2015
(51) Int. Cl.: G01N 21/90

(54) **INSPEKTIONSVORRICHTUNG UND VERFAHREN ZUR DURCHLICHTINSPEKTION VON BEHÄLTERN**
INSPECTION APPARATUS AND METHOD FOR INSPECTING CONTAINERS USING TRANSMITTED LIGHT
DISPOSITIF D'INSPECTION ET PROCÉDÉ D'INSPECTION EN LUMIÈRE TRANSMISE DE RÉCIPIENTS

(30) Priorität: 10.10.2014 DE 102014220598
(43) Veröffentlichungstag der Anmeldung: 16.08.2017
(73) Patentinhaber: Krones AG, 93073 Neutraubling (DE)
(72) Erfinder: NIEDERMEIER, Anton, 93073 Neutraubling (DE)
(74) Vertreter: Grünecker Patent- und Rechtsanwälte PartG mbB
(86) Internationale Anmeldenummer: PCT/EP2015/069220
(87) Internationale Veröffentlichungsnummer: WO 2016/055209

(56) Entgegenhaltungen:
- EP-A1- 1 498 725
- DE-A1-102010 043 632
- DE-A1-102011 083 757
- DE-B3-102012 100 987
- DE-C1- 10 017 126
- DE-C1- 19 953 738
- FR-A1- 2 907 553

## Beschreibung

Die Erfindung betrifft eine Inspektionsvorrichtung zur Durchlichtinspektion von Behältern mit den Merkmalen des Oberbegriffs von Anspruch 1 und ein Durchlichtinspektionsverfahren für einen Behälter mit den Merkmalen des Oberbegriffs von Anspruch 10.

Eine derartige Inspektionsvorrichtung ist beispielsweise aus der EP 2 202 507 A1 bekannt, bei der eine Flasche mit einem Transporteur zwischen einer Beleuchtungseinrichtung und einer Kamera transportiert und im Durchlicht inspiziert wird. Über ein vor der Kamera angeordnetes Spiegelkabinett können dabei gleichzeitig mehrere umfängliche Bereiche der Flasche aus verschiedenen Perspektiven erfasst werden. Derartige Inspektionsvorrichtungen werden üblicherweise zur Seitenwandinspektion von Flaschen eingesetzt.

Des Weiteren ist aus der WO 98/19150 eine Inspektionsvorrichtung mit einer Kegeloptik zur Abbildung der Flaschenmündungsseitenwand bekannt. Diese eignet sich speziell dazu, um Strukturen im Bereich der Flaschenmündung, wie beispielsweise ein Gewinde oder einen Kragen zum Anbringen eines Kronkorkens zu inspizieren. Dabei wird der Behälter an beiden Seiten zwischen zwei Förderbändern eingespannt, von unten beleuchtet und mit der Kegeloptik von oben inspiziert.

Die zwei zuvor genannten Inspektionsvorrichtungen werden zur Qualitätssicherung üblicherweise in einer Anlage sequentiell kombiniert, wobei der Behälter zunächst für die Seitenwandinspektion auf einem Transportband stehend transportiert und danach an die beiden seitlichen Förderbänder der Inspektionsvorrichtung für die Behältermündung übergeben wird.

Nachteilig dabei ist, dass eine derartige Anordnung von Inspektionsvorrichtungen aufwendig ist und ein entsprechender Platzbedarf benötigt wird.

Die DE 100 17 126 C1 offenbart ein Verfahren und eine Vorrichtung zum optischen Überprüfen transparenter Behälter.

Die FR 2 907 553 A1 offenbart ein Inspektionsverfahren für Glasflaschen mit zwei verschiedenen Lichtarten, um Defekte mit hohem bzw. niedrigem Kontrast zu erkennen.

Die DE 199 53 738 C1 offenbart eine Inspektionsvorrichtung zur Seitenwandkontrolle von Gefäßen.

Aufgabe der vorliegenden Erfindung ist es daher, eine Inspektionsvorrichtung bereitzustellen, die weniger aufwendig ist und einen geringeren Platzbedarf hat.

Zur Lösung der Aufgabenstellung stellt die Erfindung eine Inspektionsvorrichtung mit den Merkmalen des Anspruchs 1 bereit. Vorteilhafte Ausführungsformen sind in den Unteransprüchen genannt.

Durch die Einrichtung zur Unterteilung kann die Lichtaustrittsfläche wahlweise mit einer für die Seitenwandinspektion bzw. mit einer für die Verschlusskopfinspektion geeigneten Flächenabstrahlcharakteristik unterteilt werden. Beispielsweise kann bei der Seitenwandinspektion eine vollflächig abstrahlende Lichtaustrittfläche gewählt werden. Dadurch erscheint die Seitenwand im Kamerabild besonders gleichmäßig hinterleuchtet, wodurch Verschmutzungen oder Materialeinschlüssen im Behälterkörper besonders gut erkannt werden können. Andererseits kann bei der Verschlusskopfinspektion die Lichtaustrittsfläche beispielsweise in zwei durch eine Kontrastkante separierte Teilbereiche unterteilt werden. Die Kontrastkante wird dann durch Strukturen im Bereich der Behältermündung, wie beispielsweise Gewindegänge, virtuell abgebildet und erscheint so im Kamerabild besonders kontrastreich. Es hat sich nun überaschenderweise herausgestellt, dass Defekte der Behältermündung im Kamerabild mit einem guten Kontrast erscheinen und dadurch besonders gut erkennbar sind. Dadurch kann die im Stand der Technik genutzte Inspektionsvorrichtung zur Seitenwandinspektion auch zur zuverlässigen Inspektion von Defekten im Mündungsbereich des Behälters eingesetzt werden. Folglich ist es nicht mehr notwendig, eine eigens für die Behältermündung ausgebildete Inspektionsvorrichtung sequentiell nach der Seitenwandinspektion anzuordnen. Dadurch kann die Inspektionsvorrichtung insgesamt kompakter und weniger aufwendig aufgebaut werden.

Die Inspektionsvorrichtung kann in einer Getränkeverarbeitungsanlage angeordnet sein. Die Inspektionsvorrichtung kann einer Behälterherstellungsanlage (beispielsweise einer Streckblasmaschine), einem Rinser, einer Sortiermaschine, einer Leerflascheninspektionsmaschine, einer Vollflascheninspektionsmaschine, einem Füller, einem Verschließer und/oder einer Verpackungsmaschine zugeordnet sein.

Die Behälter können dazu vorgesehen sein, Getränke, Nahrungsmittel, Hygieneartikel, Pasten, chemische, biologische und/oder pharmazeutische Produkte aufzunehmen. Die Behälter können Kunststoffflaschen, Glasflaschen, Dosen und/oder Tuben sein. Bei Kunststoffbehältern kann es sich im speziellen um PET-, PEN-, HD-PE- oder PP-Behälter bzw. Flaschen handeln. Ebenso kann es sich um biologisch abbaubare Behälter oder Flaschen handeln, deren Hauptbestandteile aus nachwachsenden Rohstoffen wie zum Beispiel Zuckerrohr, Weizen oder Mais bestehen.

Die Seitenwandinspektion kann die Inspektion des Behälterkörpers, insbesondere den Behälterbereich zwischen Behälterboden und Verschlusskopf umfassen. Anders ausgedrückt kann die Seitenwandinspektion alle Behälterbereiche außer dem Verschlusskopf umfassen. Der Verschlusskopf kann ein Behältermündungsbereich sein. Der Verschlusskopf kann alle Behälterelemente entlang der Mündung, zum Verschließen und zum Behältertransport am Hals (Neck-Handling) umfassen.

Die Inspektionsvorrichtung kann zur Inspektion von Strukturen im Bereich der Behältermündung ausgebildet sein. Derartige Strukturen können beispielsweise ein Tragring, Entlastungsschlitze, eine Dichtfläche und/oder Gewindegänge sein. Zusätzlich kann die Inspektionsvorrichtung zur Inspektion der Behälterseitenwand und/oder des Behälterbodens ausgebildet sein.

Die Inspektionsvorrichtung kann einen Transporteur zur Förderung der Behälter umfassen. Der Transporteur kann ein Förderband oder ein Karussel sein. Die Inspektionsvorrichtung kann Behälteraufnahmen umfassen, um die Behälter gegenüber der Kamera zu verdrehen und/oder zu verschieben.

"Durchlichtinspektion" kann hier bedeuten, dass der zu inspizierende Behälter durchleuchtet wird und/oder zwischen der Kamera und der Beleuchtungseinrichtung angeordnet ist. Ebenso kann dies bedeuten, dass die Beleuchtungseinrichtung und die Kamera derart angeordnet sind, dass das Licht erst den Behälter durchläuft, bevor es in die Kamera gelangt.

Die Kamera kann einen CCD- oder CMOS- Sensor umfassen, der als Zeilen- oder Flächensensor ausgebildet ist. Die Kamera kann ein Objektiv umfassen, das insbesondere dazu ausgebildet ist, bei der Inspektion den zu inspizierenden Behälter auf dem Sensor abzubilden. Die Kamera kann über eine Datenschnittstelle drahtlos oder drahtgebunden mit einer Maschinensteuerung und/oder einer Bildverarbeitungseinheit verbunden sein. Es ist denkbar, dass lediglich der für die Inspektionsaufgabe relevante Bildteil (Region of Interest - ROI) aus dem Kamerasensor ausgelesen wird. Dies ist bevorzugt bei CMOS-Sensoren möglich. Dadurch kann das Kamerabild schneller aus der Kamera ausgelesen werden und es ist möglich, innerhalb eines Inspektionsfensters besonders viele verschiedene Aufnahmen zu erfassen. Ebenso kann der Behälterdurchsatz dadurch gesteigert werden.

Die Beleuchtungseinrichtung kann wenigstens eine Lichtquelle, wie beispielsweise eine LED, eine Glühbirne oder eine Leuchtstoffröhre umfassen. Die LED kann eine einfarbige, mehrfarbige oder eine Weißlicht-LED sein. Die Beleuchtungseinrichtung kann eine Lichtmischeinrichtung zur Mischung des Lichts der Lichtquellen umfassen, so dass es möglichst gleichmäßig aus der Lichtaustrittsfläche austritt. Die Lichtmischeinrichtung kann eine White-Box, lichtstreuende Spiegelflächen, Linsen und/oder Scheiben (Milchglas, Streuscheiben, etc.) umfassen. Ferner kann die Beleuchtungseinrichtung einen Lichtleiter umfassen, der mittels Streustrukturen das Licht der LEDs gleichmäßig auf der Lichtaustrittsfläche verteilt.

Dass "die Kamera mit ihrem Blickfeld derart ausgerichtet ist, dass sie eine Lichtaustrittsfläche der Beleuchtungseinrichtung erfasst" kann hier bedeuten, dass eine optische Achse der Kamera auf die Lichtaustrittsfläche gerichtet ist und diese schneidet. Die optische Achse der Kamera kann die optische Achse des Kameraobjektivs sein. Das Blickfeld der Kamera kann das Raumvolumen sein, das mittels des Objektivs auf dem Kamerachip abgebildet wird.

"Vorwiegend horizontal separierte Teilbereiche" kann hier bedeuten, dass die Teilbereiche quer zu einer Behälterlängsachse separiert sind. Anders ausgedrückt kann dies bedeuten, dass die Teilbereiche entlang der Behälterlängsachse angeordnet sind und eine Trennlinie zwischen den Teilbereichen quer zur Behälterlängsachse verläuft.

Die wenigstens zwei Teilbereiche können durch eine Kontrastkante separiert sein, die insbesondere horizontal bzw. quer zur Behälterlängsachse verläuft. Die Einrichtung zur Unterteilung der Lichtaustrittsfläche kann dazu ausgebildet sein, dass sie die Lichtaustrittsfläche in genau zwei Teilbereiche unterteilt, die insbesondere durch genau eine Kontrastkante separiert sind. Ebenso ist denkbar, dass die Einrichtung die Lichtaustrittsfläche in genau drei Teilbereiche unterteilt, die durch zwei Kontrastkanten separiert sind, die insbesondere horizontal bzw. quer zur Behälterlängsachse verlaufen. Die Teilbereiche können jeweils eine rechteckige Form aufweisen und insbesondere aneinander angrenzen.

Eine Triggereinrichtung kann dazu vorgesehen sein, beim Behältertransport die Aufnahme von wenigstens zwei Kamerabildern und zwischen den Aufnahmen das Umschalten wenigstens eines Teilbereichs auszulösen. Dadurch kann die Inspektionsvorrichtung mehrere Kamerabilder beispielsweise während des Behältertransports aufnehmen und arbeitet dadurch besonders effizient. Die Triggereinrichtung kann mit der Bewegung des Transporteurs und/oder der Behälteraufnahmen gegenüber der Kamera und/oder Beleuchtungseinrichtung synchronisierbar sein. Die Triggereinrichtung kann mit der Maschinensteuerung verbunden oder darin integriert sein. Die Triggereinrichtung kann mit der Kamera, der Einrichtung zur Unterteilung und/oder dem Transporteur über jeweils eine Signalleitung zum Austausch von Triggersignalen verbunden sein. Die Triggersignale können Analogsignale (beispielsweise eine Signalflanke) oder Digitalsignale (beispielsweise ein Auslösebefehl) sein.

Die Einrichtung zur Unterteilung ist derart ausgebildet sein, dass zur Verschlusskopfinspektion wenigstens einer der Teilbereiche abgeschaltet ist, wobei der abgeschaltete Teilbereich bei der Inspektion im Kamerablickfeld in Behälterlängsrichtung benachbart zum Behältermündungsbereich angeordnet ist. Dadurch, dass einer der Teilbereiche an- und ein anderer ausgeschaltet sind, ergibt sich in den Gewindegängen bzw. Umfangsstrukturen des Verschlusskopfs ein besonders hoher Kontrast. Folglich können Beschädigungen in diesem Bereich besonders gut erkannt werden. Dass der abgeschaltete Teilbereich benachbart zum Behältermündungsbereich angeordnet ist, kann hier bedeuten, dass der abgeschaltete Teilbereich im Kamerabild entlang der Behälterlängsachse einen Abstand von 0 mm - 50 mm zum Behältermündungsbereich aufweist, vorzugsweise einen Abstand von 0 mm - 10 mm.

Die Einrichtung zur Unterteilung kann derart ausgebildet sein, dass die separierten Teilbereiche unterschiedliche Leuchtdichten, Lichtwellenlängen und/oder Polarisationen aufweisen. Dadurch können die einzeln separierten Teilbereiche besonders gut von der Kamera unterschieden werden. Unterschiedliche Leuchtdichten kann hier bedeuten, dass die separierten Teilbereiche jeweils in sich eine in etwa konstante Leuchtdichte aufweisen, jedoch zueinander eine unterschiedliche Leuchtdichte. Hierdurch entsteht im Bereich der Kontrastkante ein Helligkeitssprung. "Unterschiedliche Leuchtdichten" kann auch bedeuten, dass wenigstens einer der separierten Teilbereiche Licht abstrahlt und wenigstens ein anderer der separierten Teilbereiche kein Licht abstrahlt. Leuchtdichte kann hier bedeuten, dass dies die von der Kamera wahrgenommene Helligkeit des separierten Teilbereichs ist. "Unterschiedliche Lichtwellenlängen" kann hier bedeuten, dass die separierten Teilbeiche jeweils unterschiedliche Farben abstrahlen. "Unterschiedliche Lichtwellenlängen" kann hier auch bedeuten, dass sich die spektralen Anteile des von den separaten Teilbereichen abgestrahlten Lichts unterscheiden. "Unterschiedliche Polarisation" kann bedeuten, dass die separierten Teilbereiche Licht mit unterschiedlichen Polarisationsrichtungen oder Polarisationsdrehrichtungen abstrahlen. Beispielsweise kann ein separierter Teilbereich Licht mit vertikal und der andere Teilbereich Licht mit horizontal polarisiertem Licht abstrahlen. Ebenso kann ein separierter Teilbereich linksdrehend zirkular polarisiertes Licht und der andere Teilbereich rechtsdrehend zirkular polarisiertes Licht abstrahlen.

Die Einrichtung zur Unterteilung kann derart schaltbar ausgebildet sein, dass die Lichtaustrittsfläche zur Seitenwandinspektion vollständig leuchtet. Dadurch ist bei der Seitenwandinspektion eine besonders homogene Beleuchtung möglich, wodurch kleine Fehlstellen (Materialeinschlüsse, Verschmutzungen, Kratzer oder dergleichen) in der Behälterseitenwand besonders gut erkennbar sind. Denkbar ist auch, dass die Behältermündung und/oder der Behälterboden bei einer vollständig leuchtenden Lichtaustrittsfläche mit der Kamera aufgenommen werden. Beispielsweise können so zwei Bilder einmal mit und einmal ohne Kontrastkante verglichen werden.

Die Inspektionsvorrichtung kann dazu ausgebildet sein, den Behälter mit der Kamera während eines kontinuierlichen Transports an mehreren Positionen gegenüber der Beleuchtungseinrichtung aufzunehmen. Es ist dazu nicht notwendig, dass die Lichtaustrittsfläche den Behälter vollständig hinterleuchtet. Dadurch können besonders viele Aufnahmen des Behälters erstellt werden, wodurch eine noch genauere Inspektion möglich ist. Denkbar ist, dass der Behälter an den Positionen durch die veränderte Kameraperspektive aus zusätzlichen Richtungen erfasst wird. Die Einrichtung zur Unterteilung kann zur Positionsänderung und/oder Invertierung der Kontrastkante ausgebildet sein, wobei optional die Kontrastkante an eine Behälterhöhe anpassbar ist. Dadurch ist es ebenfalls möglich, dass verschiedene Aufnahmen mit unterschiedlichen Kontrastkanten miteinander in einer Bildverarbeitung verrechnet und Fehler am Behälter besser erkannt werden können.

Die Einrichtung zur Unterteilung kann ein Blendenelement umfassen, das als mechanisch bewegbare Blende oder als Flüssigkristallelement ausgebildet ist. Mit dem Blendenelement kann dann über eine Steuerung die Position und/oder die Richtung des Helligkeitssprungs in der Kontrastkante verändert werden. Bei der mechanisch bewegbaren Blende kann es sich um verschiebbare Vorhänge handeln, die optional außerhalb der Lichtaustrittsfläche auf einer Rolle aufwickelbar sind. Die mechanisch bewegbare Blende kann einen Aktuator zur Verstellung der Blendenposition umfassen. Ebenso kann die mechanisch bewegbare Blende verschiedene Lamellen umfassen, die mittels eines Aktuators gegeneinander verschoben werden. Durch das Flüssigkristallelement kann über eine Umschaltung von elektrischen Spannungen das Blendenelement besonders schnell gesteuert werden. Dadurch ist es möglich, kurz hintereinander zwei oder mehrere Aufnahmen mit verschiedenen Blendenstellungen zu machen und anschließend auszuwerten. Beispielsweise kann sich die bewegbare Blende bei einer ersten Aufnahme zur Verschlusskopfinspektion im Kamerabild über dem Verschlusskopf und/oder bei einer zweiten Aufnahme unter dem Verschlusskopf befinden, um den entsprechenden Teilbereich der Lichtaustrittsfläche abzudecken.

Die Einrichtung zur Unterteilung kann einzeln schaltbare Abstrahlzonen der Lichtaustrittsfläche umfassen. Dadurch können die separierten Teilbereiche besonders schnell und einfach umgeschaltet werden. Die schaltbaren Abstrahlzonen können mit den separierten Teilbereichen korrespondieren. Beispielsweise kann es sich bei jeder schaltbaren Abstrahlzone um einen flächig ausgebildeten Lichtleiter mit Auskoppelstrukturen und wenigstens einer LED am Rand des Lichtleiters handeln. Dabei wird das Licht der LED über den Rand in den Lichtleiter eingekoppelt und mittels der Auskoppelstrukturen flächig zur Lichtaustrittsfläche hin ausgekoppelt. Ebenso können die schaltbaren Abstrahlzonen jeweils LEDs, Streuflächen und/oder - scheiben umfassen. Durch die Anordnung mehrerer solcher Abstrahlzonen kann besonders einfach eine Beleuchtungseinrichtung mit separierten Teilbereichen bereitgestellt werden, die über das An- und Ausschalten der LEDs eine Veränderung der Kontrastkante erlauben. Beispielsweise kann die Beleuchtungseinrichtung mehrere matrix- oder bienenwabenartig angeordnete LEDs umfassen, die einzeln oder gruppenweise an- und abschaltbar sind. Dadurch kann die Kontrastkante einen besonders flexiblen Verlauf haben. Die schaltbaren Abstrahlzonen können entsprechend der Behälterhöhe zu- und abschaltbar sein.

Die Kamera kann eine Schwarz/Weiß- oder eine Farbkamera sein. Mit der Schwarz/Weiß- Kamera können besonders gut unterschiedliche Leuchtdichten bzw. Polarisationen erfasst werden. Dazu kann vor oder hinter dem Kameraobjektiv ein Polarisationsfilter angeordnet sein. Denkbar ist auch, dass zwei Kameras an verschiedenen Seiten eines Polarisationsteilers in der Inspektionsvorrichtung angeordnet sind. Mit der Farbkamera können separierte Teilbereiche erfasst werden, die jeweils unterschiedliche Lichtwellenlängen abstrahlen. Ferner kann die Kamera wenigstens 2 Megapixel, insbesondere wenigstens 4 Megapixel aufweisen. Megapixel bezeichnet hier die Anzahl der Bildelemente (Pixel), die von der Kamera als Bild ausgegeben werden. Dadurch ist die Auflösung der Kamera so weit erhöht, dass die Behältermündung (bzw. der Gewindekopf) und die Seitenwand mit einer Kamera inspiziert werden können.

Die Kamera kann einen veränderbaren Bildauslesebereich (Field of View) aufweisen. Gemeint ist hier, dass nur eine Teilfläche des Kamerasensors mit der Kameraelektronik ausgelesen und als Bild ausgegeben wird. Die geringeren Bilddatenmengen können so schneller verarbeitet und im Gegenzug die Bildrate der Kamera erhöht werden. Folglich können bei einem fortlaufenden Behältertransport mehr Aufnahmen erstellt werden und die Inspektionsvorrichtung arbeitet effizienter.

Die Kontrastkante kann auf der Lichtaustrittsfläche im Wesentlichen gerade verlaufen. Dadurch ergibt sich ein besonders hoher Kontrast in Strukturen, die im Wesentlichen gerade auf der Behälteroberfläche verlaufen. Derartige Strukturen sind beispielsweise Gewindegänge, ein Kragen und/oder eine Kante. "Im Wesentlichen gerade" kann dabei bedeuten, dass die Kontrastkante entlang einer Geraden oder leicht gekrümmten Kurve verläuft, optional mit einem minimalen Krümmungsradius in einem Bereich von 100 mm bis Unendlich, weiterhin optional in einem Bereich von 500 mm bis Unendlich.

Ebenso ist denkbar, dass die Kontrastkante gegenüber der Lichtaustrittsfläche schräg bzw. als beliebige Kurve verläuft. Ferner kann die Kontrastkante Stufen, Knicke oder dergleichen aufweisen.

Die Kontrastkante kann von einem ersten äußeren Rand zu einem gegenüberliegenden, zweiten äußeren Rand der Lichtaustrittsfläche verlaufen. Die Kontrastkante kann also über das gesamte Blickfeld der Kamera verlaufen, wobei sie insbesondere im Wesentlichen gerade durch das Blickfeld verläuft.

Die Inspektionsvorrichtung kann wenigstens eine Behälteraufnahme und/oder einen Transporteur umfassen und die Einrichtung zur Unterteilung kann gegenüber der Behälteraufnahme und/oder dem Transporteur derart angeordnet sein, dass die Kontrastkante bei der Inspektion im Wesentlichen quer zu einer Behälterlängsachse verläuft. Dadurch verläuft die Kontrastkante im Blickfeld der Kamera im Wesentlichen tangential zu den zu inspizierenden Strukturen an der Behältermündung und es ergibt sich ein besonders hoher Kontrast im Kamerabild. Dass "die Kontrastkante bei der Inspektion im Wesentlichen quer zu einer Behälterlängsachse verläuft", kann hier bedeuten, dass die Kontrastkante im Wesentlichen parallel zu einer Transportrichtung des Behälters verläuft.

Die Kamera kann derart auf die Lichtaustrittsfläche ausgerichtet sein, dass die Kontrastkante bei der Inspektion unmittelbar unterhalb und/oder oberhalb eines Behältermündungsbereichs in die Kamera abgebildet wird. Dadurch werden längliche Strukturen an dem Behältermündungsbereich, wie beispielsweise ein Gewindegang, scheinbar längs durch die Kontrastkante zerteilt und ein Fehler kann von dem Gewindegang besonders gut im Kamerabild getrennt werden.

Die optische Achse der Kamera kann gegenüber der Flächennormalen der Lichtaustrittsfläche in einem Bereich von 4 Grad bis 15 Grad geneigt sein. Dadurch stören Strukturen auf der Behälterrückseite das Kamerabilds besonders wenig. Beispielsweise kann die optische Achse der Kamera derart geneigt sein, dass die Kamera den Behälter von schräg unten erfasst. Dies kann bedeuten, dass eine Ebene, die mit der optischen Achse der Kamera als Flächennormale beschrieben wird zur Längsachse des zu inspizierenden Behälters einen Winkel von 4 - 15 Grad aufweist.

Zwischen der Kamera und der Beleuchtungseinrichtung kann ein Spiegelkabinett angeordnet sein. Dadurch ist es möglich, den Behälter aus mehreren Perspektiven in einem Kamerabild zu erfassen. Der Behälter kann dabei zwischen der Beleuchtungseinrichtung und dem Spiegelkabinett angeordnet sein. Ein Spiegelkabinett kann dazu ausgebildet sein, dass eine einzelne Kamera den Behälter aus wenigstens zwei Perspektiven erfasst. Denkbar ist, dass zwei Spiegelkabinette einander gegenüberliegend an einer Transporteinrichtung angeordnet sind. Dadurch kann der Behälter aus zwei gegensätzlichen Richtungen inspiziert werden. Alternativ können vier Spiegelkabinette an der Transporteinrichtung angeordnet sein. Zwischen den jeweils zwei gegenüberliegenden Kabinetten können die Behälter in einem Bereich von 70-110° mittels seitlich am Behälterumfang angreifenden Riemen die unterschiedlich schnell angetrieben werden gedreht werden Damit können alle Behälterbereiche vollumfänglich auf der zur Kamera weisenden Behälterfläche erfasst werden.

Darüber hinaus stellt die Erfindung mit dem Anspruch 10 ein Durchlichtinspektionsverfahren für einen Behälter mit einem Behälterkörper und einem Behältermündungsbereich bereit, wobei wenigstens ein Teilbereich des Behälters von einer Beleuchtungseinrichtung mit einer Lichtaustrittsfläche durchleuchtet und von wenigstens einer Kamera erfasst wird, dadurch gekennzeichnet, dass ein Kamerabild des Behälterkörpers aufgenommen wird, wobei wenigstens ein dem Behälterkörper zugeordneter Teilbereich der Lichtaustrittsfläche angeschaltet wird, und ein Kamerabild des Behältermündungsbereichs aufgenommen wird, wobei wenigstens ein dem Behältermündungsbereich zugeordneter Teilbereich angeschaltet und wenigstens ein dazu benachbarter Teilbereich ausgeschaltet wird.

Durch das Anschalten des dem Behälterkörper zugeordneten Teilbereichs kann der Behälterkörper besonders homogen zur Seitenwandinspektion hinterleuchtet werden, wodurch Fremdkörper oder Fehlstellen besonders gut erkannt werden. Andererseits kann bei der Inspektion des Behältermündungsbereichs durch den angeschalteten Teilbereich und den abgeschalteten Teilbereich ein entsprechender Kontrastunterschied erzeugt werden, der sich dann als Kontrastkante in Behälterstrukturen an der Behältermündung abbildet. Daher ergibt sich im Kamerabild ein besonders hoher Kontrast an Gewindegängen oder an einem Kragen an der Behältermündung. Dadurch können Fehlstellen im Bereich der Behältermündung besonders zuverlässig erkannt werden. Folglich kann das Verfahren in eine Inspektionseinrichtung zur Seitenwandinspektion integriert und dadurch Platz und Aufwand eingespart werden.

Der Behältermündungsbereich kann den Verschlusskopf des Behälters umfassen. Der Behälterkörper kann die Behälterseitenwand mit oder ohne den Behälterboden umfassen.

Der dem Behälterkörper zugeordnete Teilbereich der Lichtaustrittsfläche kann der Teilbereich sein, der im Blickfeld der Kamera hinter dem Behälterkörper angeordnet ist und insbesondere diesen vollflächig hinterleuchtet. Ebenso kann der dem Behältermündungsbereich zugeordnete Teilbereich der Lichtaustrittsfläche der Teilbereich sein, der im Blickfeld der Kamera hinter dem Behältermündungsbereich angeordnet ist und insbesondere diesen vollflächig hinterleuchtet. Ein dazu benachbarter Teilbereich kann daran unmittelbar anschließen.

Der Behälterkörper kann sich bei der Aufnahme des Behältermündungsbereichs wenigstens teilweise außerhalb des Blickfelds der Kamera befindet. Dadurch kann die Aufnahme des Behältermündungsbereichs bereits erfolgen, wenn der Behälter beim Transport nicht vollständig im Kamerabild zu sehen ist. Beispielsweise bei der Ein- und Ausfahrt ins Kamerablickfeld. Dadurch wird das Inspektionsverfahren effizienter. Anders ausgedrückt, ist denkbar, dass sich lediglich ein Teil des Behälters beim Eintritt in das Inspektionsfenster vor der Lichtaustrittsfläche befindet, beispielsweise nur die Behältermündung. Dieser Teil kann dann bereits mit einer ersten Aufnahme inspiziert werden. Anschließend kann der Behälter weitertransportiert und in einer zweiten Aufnahme vollständig hinterleuchtet werden. Nach einem erneuten Weitertransport kann in einer dritten Aufnahme die Kontrastkante mit der Einrichtung zur Unterteilung aktiviert und die Behältermündung inspiziert werden. Dadurch können besonders viele unterschiedliche Kamerabilder aufgenommen werden, wodurch die Inspektion noch zuverlässiger wird.

Denkbar ist auch, dass eine vierte Aufnahme des Behälters mit einer eingeschalteten Auflichtbeleuchtungseinrichtung erstellt wird. Dadurch können beispielsweise an der Behältermündung anhaftende Farben (z.B. Lippenstift oder dergleichen) erkannt werden.

Der Behälter kann zwischen den Aufnahmen von einer Transporteinrichtung weitertransportiert werden. Dadurch kann während des Transports sowohl eine Seitenwandinspektion als auch eine Verschlusskopfinspektion durchgeführt werden.

Denkbar ist, dass zur Inspektion lediglich eines Teils des Behälters (Behältermündung) der Kamerasensor nur teilweise, bevorzugt im oberen Drittel ausgelesen wird.

Bei der Aufnahme des Behältermündungsbereichs kann ein erster benachbarter Teilbereich angeschaltet und ein zweiter benachbarter Teilbereich ausgeschaltet werden und bei einer weiteren Aufnahme des Behältermündungsbereichs kann die benachbarten Teilbereiche entsprechend umgekehrt geschaltet werden. Dadurch wird die Kontrastkante invertiert und es ergibt sich so eine höhere Erkennungssicherheit bei der Inspektion.

Der wenigstens eine benachbarte Teilbereich kann im Kamerablickfeld in Behälterlängsrichtung über und/oder unter dem Behältermündungsbereich angeordnet sein. Dadurch hebt sich einerseits der Behältermündungsbereich gegenüber einer dahinterliegenden, homogenen Leuchtfläche besonders gut ab und andererseits wird die darüber- und/oder darunterliegende Kontrastkante besonders kontrastreich in den Strukturen des Mündungsbereichs abgebildet. Folglich ergibt sich eine besonders hohe Erkennungszuverlässigkeit.

Bei der Aufnahme des Behälterkörpers können alle Teilbereiche der Lichtaustrittsfläche angeschaltet werden. Dadurch ergeben sich bei der Inspektion des Behälterkörpers eine besonders homogene Lichtaustrittsfläche und eine hohe Erkennungszuverlässigkeit für Fehlstellen oder Fremdkörper am Behälterkörper.

Die Kontrastkante kann zusätzlich oder alternativ bei der Aufnahme eines weiteren Kamerabildes verschoben und/oder invertiert werden. Durch die Aufnahme des weiteren Kamerabildes mit der verschobenen und/oder invertierten Kontrastkante ergibt sich lokal zwischen beiden Kamerabildern eine Helligkeitsmodulation und die Inspektion wird dadurch noch zuverlässiger. Anders ausgedrückt muss so nur eine Modulation der Kontrastkante analysiert werden, um Fehlstellen an der Behältermündung zu erfassen.

Die Umschaltung der Kontrastkanten kann von Aufnahme zu Aufnahme erfolgen. Dies kann mittels fest gespeicherten Programm erfolgen oder "on the Fly" mittels Ethernetübertragung oder Can- Busanschaltung. Im Falle der Ethernetanschaltung kann ein beliebiges echtzeitfähiges Protokoll gemeint sein.

Das Durchlichtinspektionsverfahren kann die zuvor in Bezug auf die Inspektionsvorrichtung beschriebenen Merkmale einzeln oder in beliebigen Kombinationen aufweisen.

Weitere Merkmale und Vorteile der Erfindung werden nachfolgend anhand der in den Figuren dargestellten Ausführungsbeispiele näher erläutert. Dabei zeigt:
- Fig. 1A - 1C: ein Ausführungsbeispiel einer Inspektionsvorrichtung zur Durchlichtinspektion von Behälters in einer perspektivischen Darstellung;
- Fig. 2: die von der Inspektionsvorrichtung in den Fig. 1A - 1C während des Transports aufgenommenen Kamerabilder in einer überlagerten Ansicht;
- Fig. 3: ein Bildausschnitt im Bereich der Behältermündung des in Fig. 1A aufgenommenen Kamerabildes;
- Fig. 4: ein Bildausschnitt im Bereich der Behältermündung des in Fig. 1C aufgenommenen Kamerabildes; und
- Fig. 5: der in Fig. 4 dargestellte Bildausschnitt des Kamerabildes mit einer Fehlstelle im Bereich der Behältermündung.
- Fig. 6: eine detaillierte Darstellung der Einrichtung zur Unterteilung der Lichtaustrittsfläche nach dem Ausführungsbeispiel aus Fig. 1 in einer Ansicht senkrecht auf die Lichtaustrittsfläche;
- Fig. 7: eine zur Fig. 6 alternative Ausführungsform der Einrichtung zur Unterteilung der Lichtaustrittsfläche in einer Ansicht senkrecht auf die Lichtaustrittsfläche;
- Fig. 8: eine weitere zu den Fig. 6 und 7 alternative Ausführungsform der Einrichtung zur Unterteilung der Lichtaustrittsfläche in einer Ansicht senkrecht auf die Lichtaustrittsfläche;

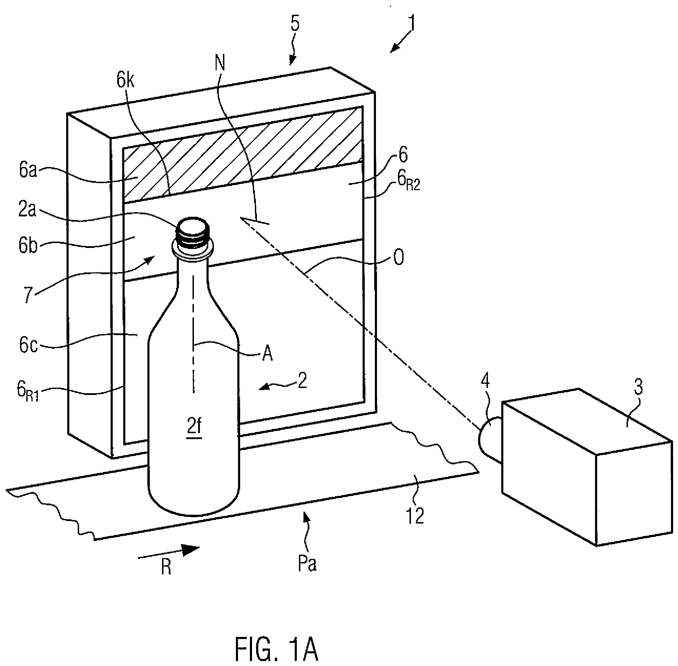

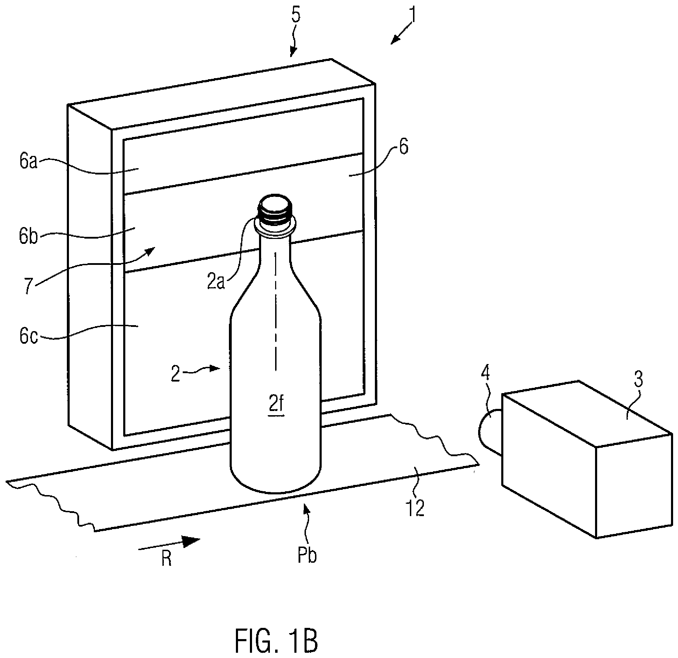

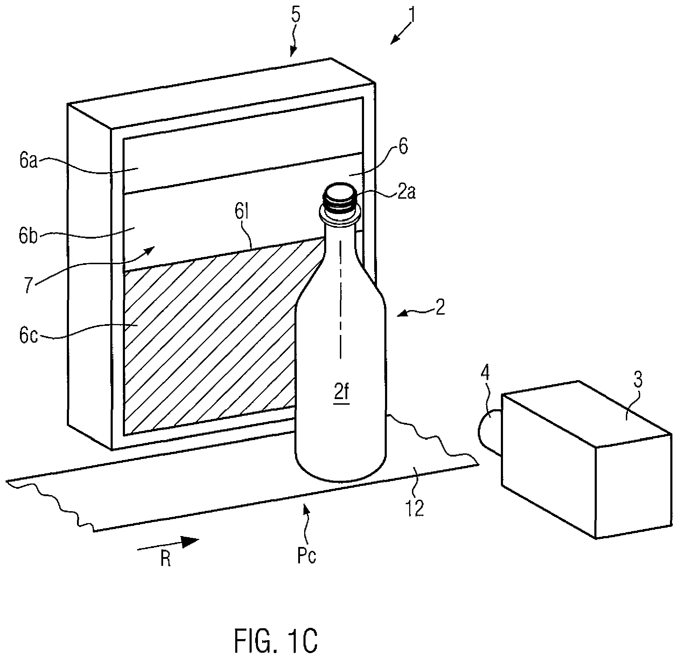

In den Fig. 1A - 1C ist ein Ausführungsbeispiel einer Inspektionsvorrichtung 1 zur Durchlichtinspektion von Behältern 2 in einer perspektivischen Ansicht dargestellt. Zu sehen ist die Vorrichtung 1 bei der Verschlusskopfinspektion (Fig. 1A und 1C) und der Seitenwandinspektion (Fig. 1B) des Behälters 2. Hierzu wird der Behälter 2 auf dem Förderband 12 in der Förderrichtung R zwischen die Beleuchtungseinrichtung 5 und die Kamera 3 transportiert. An den Inspektionspositionen Pa - Pc wird dann der Behälter durch das aus der Lichtaustrittsfläche 6 austretende Licht durchleuchtet und von der Kamera 3 erfasst. Die Kamera 3 ist dazu mit ihrem Blickfeld derart ausgerichtet, dass sie den gesamten Behälter 2 und die dahinter liegende Lichtaustrittsfläche 6 aufnimmt. Denkbar ist auch, dass bei der Verschlusskopfinspektion lediglich ein Teilbereich des Kamerabildes, insbesondere der Ausschnitt mit der Behältermündung 2a mittels eines veränderbaren Bildausfesebereichs (Field of View) der Kamera 3 ausgelesen und weiterverarbeitet wird. Ferner ist hier die Kamera 3 als CMOS-Kamera ausgebildet, es ist jedoch auch jede andere Kamerakonfiguration denkbar.

Der Transporteur ist hier als Förderband 12 ausgebildet, denkbar ist jedoch auch ein Karussell oder dergleichen. An dem Transporteur können drehbare Behälteraufnahmen angeordnet sein.

Die Kamera 3 weist einen CMOS-Bildsensor auf und gibt die Bilddaten mit einer Auflösung von 4 Megapixeln aus. Dadurch kann sowohl die Behältermündung 2a mit einer genügend hohen Auflösung als auch die Seitenwand als ganzes erfasst werden. Ferner kann mit dem CMOS-Bildsensor nur ein Teil der Pixel (Field of View) als Bild ausgegeben werden, wodurch die Bildrate erhöht wird.

Ferner ist die Kamera 3 mit dem Objektiv 4 so auf die Beleuchtungseinrichtung 5 ausgerichtet, dass die optische Achse O der Kamera mit der Normalen der Lichtaustrittsfläche N einen Winkel von 10 Grad einnimmt. Anders ausgedrückt ist die Kamera 3 um 10 Grad nach unten geschwenkt, so dass sie den Behälter 2 mit einer leicht schrägen Blickrichtung von unten nach oben erfasst. Dadurch werden Strukturen, die der Beleuchtungseinrichtung 5 zugewandt sind nicht direkt mit den Strukturen auf der Seite zur Kamera 3 überlagert. Zu sehen ist auch, dass die Einrichtung zur Unterteilung 7 gegenüber dem Transporteur 12 derart angeordnet ist, dass die Kontrastkante 6k bei der Inspektion im Wesentlichen quer zur Behälterlängsachse A verläuft. Dadurch ergibt sich im Bereich der Behältermündung 2a an Gewindegängen, Krägen, Wülsten oder dergleichen ein besonders hoher Kontrast.

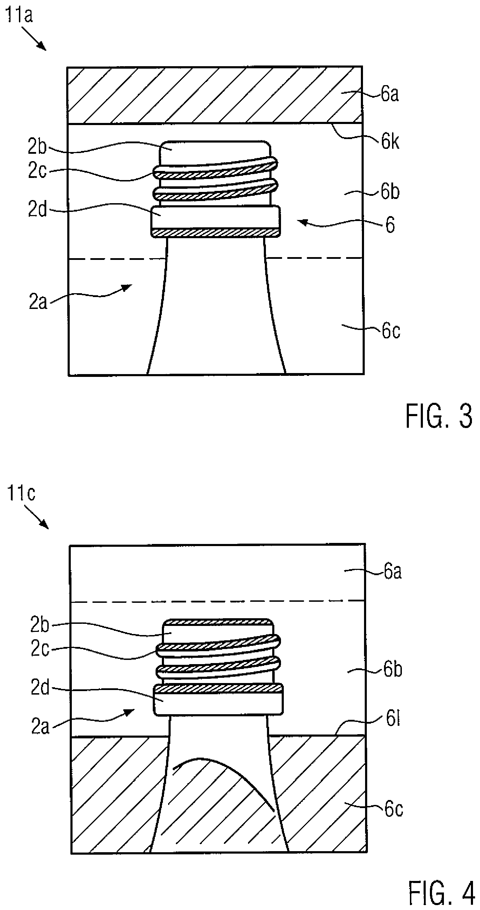

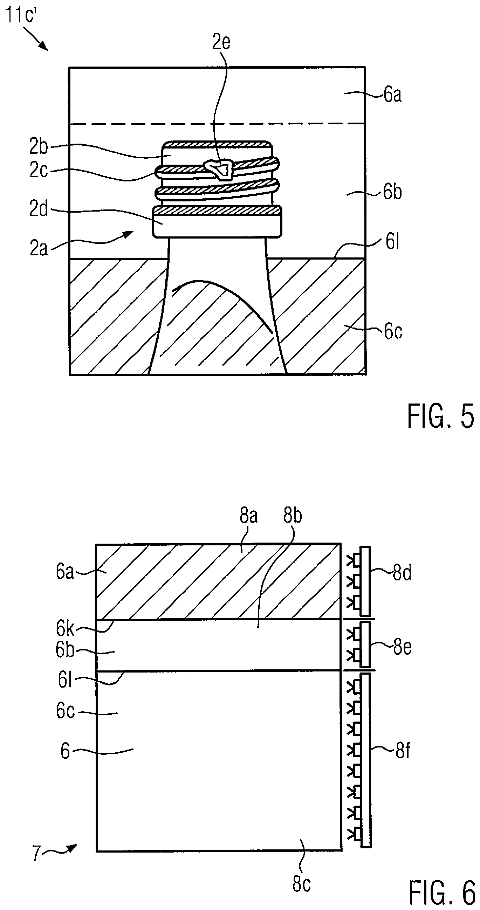

Die Beleuchtungseinrichtung 5 ist als Leuchtschirm ausgebildet, der jeweils aus den separierten Teilbereichen 6a - 6c Licht mit im Wesentlichen gleichmäßiger Leuchtdichte abstrahlt. Durch die Einrichtung zur Unterteilung 7, welche nachfolgend genauer in Bezug auf die Fig. 6 beschrieben wird, ist es möglich, die separierten Teilbereiche 6a - 6c unterschiedlich hell einzustellen (unterschiedliche Leuchtdichte) bzw. an- oder abzuschalten. Beispielsweise befindet sich in der Fig. 1A der Behälter 2 an der Position Pa zur Verschlusskopfinspektion, wobei der separierte Teilbereich 6a komplett abgeschaltet und die beiden anderen separierten Teilbereiche 6b und 6c komplett angeschaltet ist. Die Kontrastkante 6k verläuft somit auf der Lichtaustrittsfläche 6 im Wesentlichen gerade und horizontal. Anders ausgedrückt verläuft diese zwischen den beiden äußeren Rändern 6_{R1} und 6_{R2} über die gesamte Lichtaustrittsfläche 6. Zwischen den beiden separierten Teilbereichen 6b und 6c ergibt sich keine Kontrastkante, da diese Bereiche gleichmäßig mit der gleichen Leuchtdichte leuchten. Darüber hinaus ist es mit der Einrichtung zur Unterteilung 7 möglich, die Kontrastkante 6k an die Behälterhöhe anzupassen. Durch die Kontrastkante 6k sind, wie nachfolgend Anhand des Bildausschnitts in Fig. 3 genauer dargelegt, Gewindegänge an der Behältermündung 2a besonders zuverlässig inspizierbar. In der dargestellten Inspektionsposition Pa wird nun ein Kamerabild aufgenommen und auf Schäden am Verschlusskopf hin ausgewertet.

Anschließend wird der Behälter 2 durch das Förderband 12 weiter zur Position Pb zur Seitenwandinspektion transportiert. Dabei sind alle Teilbereiche 6a - 6c komplett angeschaltet und die Lichtaustrittsfläche 6 leuchtet gleichmäßig homogen. Zudem ist der Behälter 2 an der Position Pb vollständig in das Blickfeld der Kamera 3 eingefahren und es kann ein weiteres Kamerabild des gesamten Behälterkörpers 2f aufgenommen und ausgewertet werden. Dabei werden insbesondere Fehlstellen wie Verschmutzungen, Risse, Materialeinschlüsse, Kratzer oder dergleichen erfasst.

Im Anschluss wird der Behälter 2, wie in der Fig. 1C zu sehen, mit dem Transporteur 12 weiter an die Position Pc für eine zusätzliche Verschlusskopfinspektion inspiziert. Dabei sind die Teilbereiche 6a und 6c genau umgekehrt geschaltet wie in der Fig. 1A. Anders ausgedrückt sind der Teilbereiche 6a - 6b an- und der Teilbereich 6c abgeschaltet. Wie nachfolgend Anhand der Fig. 4 näher erläutert, eignet sich diese Beleuchtungssituation beispielweise zur Erkennung von Frakturen am Rand der Behältermündung 2a besonders gut. In der Position Pc wird noch ein weiteres Kamerabild aufgenommen und ebenfalls ausgewertet.

Denkbar ist jedoch auch jede beliebige andere für die Inspektionsaufgaben geeignete Kombination der Schaltung der Teilbereiche 6a - 6c.

Des weiteren ist in der Inspektionsvorrichtung 1 eine nicht weiter dargestellte Triggereinrichtung vorhanden, um die Behälterposition auf dem Förderband 12 zu erkennen (beispielsweise mit einer Lichtschranke) und darauf basierend die Kamera 3 an den Inspektionspositionen Pa - Pc auszulösen und dazwischen die Einrichtung zur Unterteilung 7, wie dargelegt, umzuschalten.

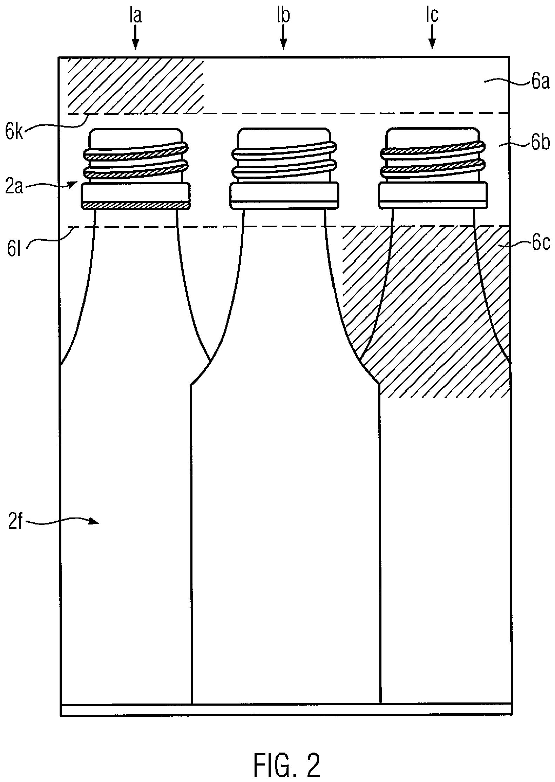

In der Fig. 2 sind die von der Inspektionsvorrichtung 1 in den Fig. 1A - 1C während des Transports aufgenommenen Kamerabilder Ia - Ic in einer überlagerten Ansicht dargestellt. Darin wird die Transportbewegung des Behälters 2 gegenüber dem Kamerablickfeld erkennbar.

Zu sehen ist, dass sich der Behälterkörper 2f in den Kamerabildern 1a und 1c nicht vollständig im Kamerablickfeld befindet. Allerdings ist die Behältermündung 2a bereits bzw. noch im Blickfeld und kann inspiziert werden. Folglich ergibt sich beim Ein- und Auslauf des Behälters 2 in die Inspektionsvorrichtung 1 eine zusätzliche Zeitspanne zur Verschlusskopfinspektion. Dabei werden der der Behältermündung 2a zugeordnete Teilbereich 6b an- und wahlweise die benachbarten Teilbereiche 6a oder 6c ausgeschaltet (siehe Bild 1a bzw. 1c).

Dagegen ist der Behälterkörper 2f im Kamerabild 1b vollständig sichtbar und alle Teilbereiche 6a - 6c sind angeschaltet, insbesondere der Teilbereich 6c, der dem Behälterkörper 2f zugeordnet ist. Dadurch kann mit dem Kamerabild 1b eine vollständige Seitenwandinspektion durchgeführt werden.

In der Fig. 3 ist der Ausschnitt 11a des Kamerabildes 1a aus der Fig. 2 zu sehen, aufgenommen mit der in Fig. 1 dargestellten Kamera 3 an der Position Pa. Zu sehen ist der Behälterhals und der Behältermündungsbereich 2a, sowie die Leuchtfläche 6 als Bildhintergrund. Die Teilbereiche 6b und 6c leuchten mit im Wesentlichen gleicher Helligkeit und werden durch die Kamera als zusammenhängender Teilbereich wahrgenommen. Im oberen Bildbereich ist ein weiterer Teilbereich 6a zu sehen, der ausgeschaltet bzw. dunkel ist. Zwischen dem Teilbereich 6a und 6b ist folglich die Kontrastkante 6k ausgebildet, die etwas oberhalb der Behältermündung im Bildausschnitt 11a erscheint.

Durch die so separierte Lichtaustrittsfläche 6 erscheint der Öffnungsbereich 2b im Wesentlichen hell. Ferner erscheinen die Gewindegänge 2c jeweils im oberen Bereich hell und im unteren Bereich dunkel, sind also längs ihres Verlaufs durch einen Helligkeitssprung gekennzeichnet. Dies ist darin begründet, dass die Kontrastkante 6k durch die Krümmung der Gewindegänge 2c vorwiegend invertiert abgebildet wird und dieses virtuelle Bild dann mittels der Kamera aufgenommen wird. Dadurch erscheinen die Gewindegänge 2c besonders kontrastreich im Kamerabild 11a. Des Weiteren ist der Kragen 2d zu sehen, der am unteren Rand ebenfalls eine invertierte Abbildung der Kontrastkante 6k zeigt.

In der Fig. 4 ist ein weiterer Ausschnitt 11c aus dem Kamerabild 1c der Fig. 2 dargestellt, bei dem im Gegensatz zu Fig. 3 die beiden oberen Teilbereiche 6a und 6b gleich hell eingeschaltet und der untere Teilbereich 6c ausgeschaltet sind. Dadurch bildet sich zwischen den Teilbereichen 6b und 6c die Kontrastkante 6l aus. Diese wird nun ebenfalls im Bereich der Behältermündung 2a durch gekrümmte Strukturen umgekehrt abgebildet. Dadurch erscheinen die oberen Bereiche der Behälteröffnung 2b, sowie der beiden Gewindegänge 2c und des Kragens 2d dunkel, andere Bereiche der Behältermündung 2a dagegen hell. Somit ergibt sich im Kamerabild ein hoher Kontrast an diesen Strukturen.

Im Bildausschnitt 11c' in der Fig. 5 ist nun die gleiche Beleuchtungssituation wie in der Fig. 4 zu sehen, wobei die Behältermündung 2a am oberen Gewindering 2c ausgeschlagen ist. Die Fraktur 2e ist im Kamerabild 11c im oberen Bereich des Gewindeganges 2c als Aufhellung gegenüber dem restlichen sich dunkel abbildenden unbeschädigten Abschnitt des Gewindeganges zu sehen und somit besonders effektiv auswertbar. Im unteren Bereich des Gewindeganges 2c zeichnet sich der Bruch lediglich als dünne schwarze Struktur ab, also nur schwierig zu erkennen.

Die Fraktur 2e wäre genauso als heller bzw. hellerer Bereich in der Beleuchtungssituation in der Fig. 3 zu sehen. Des Weiteren könnte man Frakturen am unteren Bereich des Kragens 2d besonders gut mit der Beleuchtungssituation in der Fig. 3 und an der Behälteröffnung mit der Beleuchtungssituation in der Fig. 4 erkennen. Kombiniert man bei der Auswertung Kamerabilder der beiden Beleuchtungssituationen miteinander, so ergibt sich eine besonders gute Erkennungswahrscheinlichkeit von Fehlern.

In der Fig. 6 ist die Einrichtung zur Unterteilung 7 der Lichtaustrittsfläche 6 des zuvor in Bezug auf die Fig. 1 beschriebene Ausführungsbeispiels in einer Ansicht senkrecht auf die Lichtaustrittsfläche 6 dargestellt. Jeder der separierten Teilbereiche 6a - 6c korrespondiert jeweils mit einer schaltbaren Abstrahlzone 8a - 8c. Die einzelnen Abstrahlzonen 8a - 8c können individuell ein- oder ausgeschaltet werden bzw. in der Helligkeit reguliert werden. Beispielsweise ist hier die Abstrahlzone 8a ausgeschaltet und die beiden Abstrahlzonen 8b und 8c angeschaltet. Folglich ergibt sich zwischen den separierten Teilbereiche 6a und 6b die Kontrastkante 6k. Ebenso ist denkbar, dass die Abstrahlzone 8c komplett ausgeschaltet ist und die beiden Abstrahlzonen 8a, 8b jeweils eingeschaltet sind. Die dadurch entstehende Kontrastkante 6l ist gegenüber der zuvor beschriebenen Kontrastkante 6k verschoben und zusätzlich invertiert. Ebenso ist denkbar, dass nur eine der Abstrahlzonen 8a, 8b oder 8c eingeschaltet ist und die beiden entsprechend anderen ausgeschaltet. Auch ist denkbar, dass die mittlere Abstrahlzone 8b ausgeschaltet ist und die beiden anderen Abstrahlzonen 8a und 8c angeschaltet sind. Entsprechend ergeben sich in diesen Fällen zwei Kontrastkanten 6k, 6l.

Darüber hinaus ist zu sehen, dass die Abstrahlzonen 8a - 8c jeweils einen flächigen Lichtleiter umfassen, der beispielsweise aus PMMA besteht. Mittels der drei LED-Bänke 8d - 8f wird in den jeweiligen Lichtleiter vom Rand her Licht eingekoppelt und durch hier nicht dargestellte Auskoppelstrukturen in Richtung der Lichtaustrittsfläche 6 wieder ausgekoppelt. Die Auskoppelstrukturen sind dabei so gewählt, dass die einzelnen Abstrahlzonen 8a - 8c jeweils möglichst gleichmäßig leuchten. Durch ein An- oder Abschalten bzw. durch eine Leistungssteuerung der LEDs ist es möglich, die Leuchtdichte des ausgekoppelten Lichts zu steuern.

Alternativ ist auch denkbar, dass die einzelnen Abstrahlzonen 8a - 8c entweder durch einen Farbfilter oder durch entsprechend farbige LEDs mit unterschiedlichen Farben leuchten. Durch die Verwendung einer Farbkamera können dann die Übergänge zwischen den einzelnen Abstrahlzonen 8a - 8c als Kontrastkanten 6k, 6l ausgewertet werden. Des Weiteren ist denkbar, dass die LED-Bänke 8d - 8f jeweils mehrfarbige LEDs aufweisen, die über eine entsprechende Ansteuerung Licht in unterschiedlichen Farben abstrahlen. Beispielsweise könnte jede der dargestellten LEDs drei unterschiedliche Farbchips aufweisen (beispielsweise rot, grün und blau). Die einzelnen Farben können dann je nach Bedarf erzeugt werden.

Denkbar ist auch, dass die Abstrahlzone 8a eine erste Farbe wie beispielsweise blau und die untere Abstrahlzone 8c eine zweite Farbe wie beispielsweise rot abstrahlt. Die mittlere Abstrahlzone 8b könnte dann mit diesen beiden Farben gleichzeitig abstrahlen. Durch eine entsprechende Farbauswertung in der Kamera 3 könnten dann die beiden Kontrastkanten 6k und 6l gleichzeitig erkannt werden.

Alternativ ist auch denkbar, dass die einzelnen Abstrahlzonen durch vor den Lichtleitern angeordnete Polarisationsfilter Licht in unterschiedlichen Polarisationsrichtungen abstrahlen und dieses dann mittels eines Polarisationsteilers und zwei Kameras analysiert wird. Dadurch ist es ebenfalls möglich, zwei Kontrastkanten 6k, 6l gleichzeitig zu erfassen.

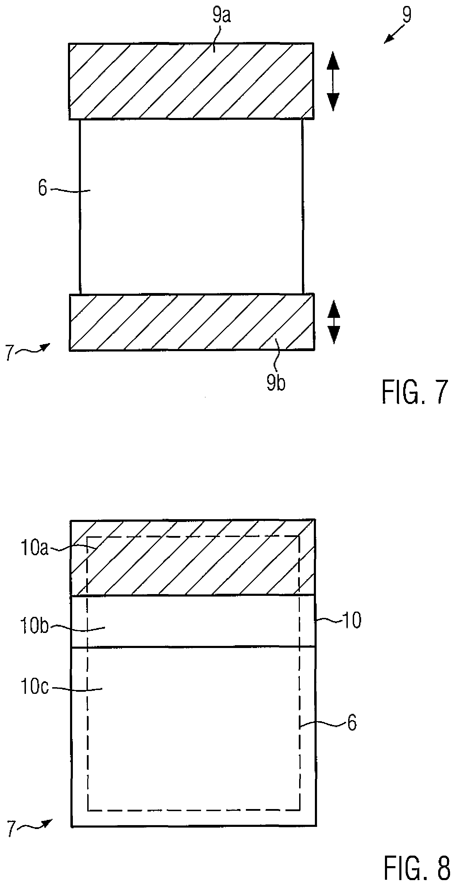

In der Fig. 7 ist eine alternative Einrichtung zur Unterteilung 7 der Lichtaustrittsfläche 6 mit einem mechanischen Blendenelement 9 dargestellt. Das Blendenelement 9 besteht aus zwei einzelnen rolloartigen Vorhängen 9a und 9b, die getrennt voneinander von oben oder von unten über die Lichtaustrittsfläche 6 geschoben werden können, so dass am Übergang des jeweiligen Vorhangs 9a, 9b eine Kontrastkante entsteht. Dadurch kann die Kontrastkante sowohl verschoben als auch invertiert werden, da beim hier dargestellten oberen Vorhang 9a die Kontrastkante von oben nach unten als Dunkel-Hell-Kante und beim unteren Vorhang 9b entsprechend umgekehrt erscheint.

Denkbar ist auch, dass lediglich ein Blendenelement mit fester Ausdehnung vor der Lichtaustrittsfläche 6 verfahren bzw. aus dessen Abstrahlbereich herausgefahren wird. Die Höhe kann in Abhängigkeit der zu produzierenden Behälterhöhe individuell angepasst werden.

In der Fig. 8 ist eine weitere alternative Einrichtung zur Unterteilung 7 der Lichtaustrittsfläche 6 als Ansicht senkrecht zur Lichtaustrittsöffnung 6 dargestellt. Zu sehen ist, dass vor einer im Wesentlichen homogen leuchtenden Lichtaustrittsfläche 6 ein Flüssigkristallefement (LCD) 10 angeordnet ist. Dieses weist drei unterschiedlich schaltbare Bereiche 10a - 10c auf, die individuell voneinander in der Transmission verändert werden können. Durch eine entsprechende Ansteuerung ist es möglich, das Flüssigkristallelement 10 als Blende zu schalten und dadurch die Lichtaustrittsfläche 6 in zwei oder drei durch eine Kontrastkante separierte Teilbereiche zu unterteilen. Dadurch können einerseits konventionelle Leuchtkästen in der Beleuchtungseinrichtung eingesetzt und andererseits die Teilbereiche besonders schnell zwischen zwei Kameraaufnahmen umgeschaltet werden.

Die Inspektionsvorrichtung 1 nach den Fig. 1 - 5 bzw. den alternativen Ausführungsformen in den Fig. 6 - 8 wird wie folgt eingesetzt: Zunächst wird bei einer ersten Inspektionsposition Pa wenigstens die Behältermündung 2a des Behälters 2 von der Beleuchtungseinrichtung 5 mittels der Lichtaustrittsfläche 6 durchleuchtet und von der Kamera 3 erfasst. Hier wird bei der Aufnahme eines ersten Kamerabilds 1a die Lichtaustrittsfläche 6 von der Einrichtung zur Unterteilung 7 in zwei durch die Kontrastkante 6k separierte Teilbereiche 6a und 6b unterteilt. Das so aufgenommene Bild 1a wird gespeichert und kann bereits zur Verschlusskopfinspektion ausgewertet werden. Anschließend wird der Behälter 2 weiter zur zweiten Inspektionsposition Pb verfahren, die Lichtaustrittfläche vollständig angeschaltet und ein weiteres Kamerabild 1b zur Seitenwandinspektion aufgenommen. Um die Erkennungswahrscheinlichkeit der Verschlusskopfinspektion zu erhöhen, wird gegebenenfalls ein drittes Kamerabild 1c bei einer dritten Inspektionsposition Pc aufgenommen, wobei hier die Teilbereiche 6b und 6c durch die Kontrastkante 6l separiert sind. Durch eine Kombination der Kamerabilder 1a und 1c bei der Auswertung wird die Erkennungswahrscheinlichkeit noch einmal erhöht.

Insgesamt ist es mit der beschriebenen Inspektionsvorrichtung 1 sowie dem beschriebenen Durchlichtinspektionsverfahren für Behälter möglich, die Verschlusskopfinspektion der Behältermündung 2a in die Seitenwandinspektion zu integrieren und dadurch Platz und Aufwand einzusparen. Ferner ist denkbar, dass bereits Kamerabilder aufgenommen werden, wenn der Behälter 2 noch nicht vollständig vor die Lichtaustrittsfläche 6 (entspricht dem Inspektionsfenster) eingefahren ist. Dabei ist bereits die Behältermündung 2a vollständig hinterleuchtet und kann inspiziert werden. Gleiches gilt für das Ausfahren des Behälters 2 aus dem Inspektionsfenster. Dadurch kann die Inspektionsvorrichtung 1 besonderes effizient genutzt werden.

Ferner kann zwischen der Kamera 3 und dem Behälter 2 ein Spiegelkabinett angeordnet sein. Dadurch können bei jeder der Inspektionspositionen Pa - Pc mit der Kamera 3 mehrere Perspektiven auf den Behälter 2 gleichzeitig erfasst werden. Ferner können mehrere Inspektionsvorrichtungen 1 mit oder ohne Spiegelkabinett in verschiedenen Ausrichtungen an dem Förderband 12 angeordnet sein, um den Behälter 2 möglichst frontal aus vielen Perspektiven zu erfassen um so eine 360° Runduminspektion zu realisieren.

Zusätzlich ist denkbar, dass die Inspektionsvorrichtung 1 eine Auflichtbeleuchtungseinrichtung aufweist. Dadurch können nichttransparente Anhaftungen am Behälter 2 besser erfasst werden.

Es versteht sich, dass in den zuvor beschriebenen Ausführungsbeispielen genannte Merkmale nicht auf diese spezielle Kombination beschränkt sind und auch in beliebigen anderen Kombinationen möglich sind.

## Patentansprüche

1. Inspektionsvorrichtung (1) zur Durchlichtinspektion von Behältern (2), mit wenigstens einer Kamera (3) und einer Beleuchtungseinrichtung (5), wobei die Kamera (3) mit ihrem Blickfeld derart ausgerichtet ist, dass sie eine Lichtaustrittsfläche (6) der Beleuchtungseinrichtung (5) erfasst, wobei die Inspektionsvorrichtung (1) eine Einrichtung zur Unterteilung (7) der Lichtaustrittfläche (6) in wenigstens zwei, vorwiegend horizontal separierte Teilbereiche (6a - 6c) umfasst, die zur Seitenwandinspektion und Verschlusskopfinspektion des Behälters wahlweise an- und abschaltbar sind,
**dadurch gekennzeichnet, dass**
die Einrichtung zur Unterteilung (7) derart ausgebildet ist, dass zur Verschlusskopfinspektion wenigstens einer der Teilbereiche (6a, 6c) abgeschaltet ist, wobei der abgeschaltete Teilbereich (6a, 6c) bei der Inspektion im Kamerablickfeld in Behälterlängsrichtung benachbart zum Behältermündungsbereich (2a) angeordnet ist.

2. Inspektionsvorrichtung (1) nach Anspruch 1, wobei eine Triggereinrichtung dazu vorgesehen ist, beim Behältertransport die Aufnahme von wenigstens zwei Kamerabildern und zwischen den Aufnahmen das Umschalten wenigstens eines Teilbereichs (6a - 6c) auszulösen.

3. Inspektionsvorrichtung (1) nach wenigstens einem der vorangegangenen Ansprüche, wobei die Einrichtung zur Unterteilung (7) derart schaltbar ausgebildet ist, dass die Lichtaustrittsfläche (6) zur Seitenwandinspektion vollständig leuchtet.

4. Inspektionsvorrichtung (1) nach wenigstens einem der vorangegangenen Ansprüche, wobei die Einrichtung zur Unterteilung (7) ein Blendenelement (9, 10) umfasst, das als mechanisch bewegbare Blende (9) oder als Flüssigkristallelement (10) ausgebildet ist.

5. Inspektionsvorrichtung (1) nach wenigstens einem der vorangegangenen Ansprüche, wobei die Einrichtung zur Unterteilung (7) einzeln schaltbare Abstrahlzonen (8a - 8c) der Lichtaustrittsfläche (6) umfasst.

6. Inspektionsvorrichtung (1) nach wenigstens einem der vorangegangenen Ansprüche, wobei die Kamera (3) eine Schwarz/Weiß- oder eine Farbkamera ist und/oder wenigstens 2 Megapixel, insbesondere wenigstens 4 Megapixel aufweist.

7. Inspektionsvorrichtung (1) nach wenigstens einem der vorangegangenen Ansprüche, wobei die Kamera (3) einen veränderbaren Bildauslesebereich (Field of View) aufweist.

8. Inspektionsvorrichtung (1) nach wenigstens einem der vorangegangenen Ansprüche, wobei eine optische Achse (O) der Kamera (3) gegenüber der Flächennormalen (N) der Lichtaustrittsfläche (6) in einem Bereich von 5° bis 15° geneigt ist.

9. Inspektionsvorrichtung (1) nach wenigstens einem der vorangegangenen Ansprüche, wobei zwischen der Kamera (3) und der Beleuchtungseinrichtung (5) ein Spiegelkabinett angeordnet ist.

10. Durchlichtinspektionsverfahren für einen Behälter (2) mit einem Behälterkörper und einem Behältermündungsbereich (2a), wobei wenigstens ein Teilbereich des Behälters (2) von einer Beleuchtungseinrichtung (5) mit einer Lichtaustrittsfläche (6) durchleuchtet und von wenigstens einer Kamera (3) erfasst wird,
**dadurch gekennzeichnet, dass**
ein Kamerabild des Behälterkörpers aufgenommen wird, wobei wenigstens ein dem Behälterkörper zugeordneter Teilbereich (6c) der Lichtaustrittsfläche (6) angeschaltet wird, und
ein Kamerabild des Behältermündungsbereichs (2a) aufgenommen wird, wobei wenigstens ein dem Behältermündungsbereich (2a) zugeordneter Teilbereich (6b) angeschaltet und wenigstens ein dazu in Behälterlängsrichtung benachbarter Teilbereich (6a, 6c) ausgeschaltet wird.

11. Durchlichtinspektionsverfahren nach Anspruch 10, wobei sich der Behälterkörper bei der Aufnahme des Behältermündungsbereichs (2a) wenigstens teilweise außerhalb des Blickfelds der Kamera befindet.

12. Durchlichtinspektionsverfahren nach Anspruch 10 oder 11, wobei bei der Aufnahme des Behältermündungsbereichs (2a) ein erster benachbarter Teilbereich (6a) angeschaltet und ein zweiter benachbarter Teilbereich (6c) ausgeschaltet wird und bei einer weiteren Aufnahme des Behältermündungsbereichs (2a) die benachbarten Teilbereiche (6a, 6c) entsprechend umgekehrt geschaltet werden.

13. Durchlichtinspektionsverfahren nach einem der Ansprüche 10 - 12, wobei der wenigstens eine benachbarte Teilbereich (6a, 6c) im Kamerablickfeld in Behälterlängsrichtung über und/oder unter dem Behältermündungsbereich (2a) angeordnet ist.

14. Durchlichtinspektionsverfahren nach einem der Ansprüche 10 - 13, wobei bei der Aufnahme des Behälterkörpers alle Teilbereiche (6a - 6c) der Lichtaustrittsfläche (6) angeschaltet werden.

## Claims

1. Inspection apparatus (1) for inspecting containers (2) using transmitted light, comprising at least one camera (3) and an illumination device (5), wherein the camera (3) is aligned with its field of vision in such a way that it captures a light exit surface (6) of the illumination device (5), wherein the inspection apparatus (1) comprises a device for subdividing (7) the light exit surface (6) into at least two, predominantly horizontally separated partial regions (6a - 6c) which can be switched on and off alternatively for side wall inspection and closure head inspection of the container,
**characterized in that**
the device for subdivision (7) is designed in such a way that for the closure head inspection at least one of the partial regions (6a, 6c) is switched off, wherein the switched-off partial region (6a, 6c) is arranged in the camera field of vision in the longitudinal direction of the container adjacent to the container mouth region (2a) during the inspection.

2. Inspection apparatus (1) according to claim 1, wherein a trigger device is provided for triggering the taking of at least two camera pictures during container transport and the switching over of at least one partial region (6a - 6c) between the taking of the pictures.

3. Inspection apparatus (1) according to at least one of the preceding claims, wherein the device for subdivision (7) is designed to be switchable in such a way that the light exit surface (6) illuminates completely for sidewall inspection.

4. Inspection apparatus (1) according to at least one of the preceding claims, wherein the device for subdivision (7) comprises an aperture element (9, 10) which is designed as a mechanically movable aperture (9) or as a liquid crystal element (10).

5. Inspection apparatus (1) according to at least one of the preceding claims, wherein the device for subdivision (7) comprises individually switchable radiation zones (8a - 8c) of the light exit surface (6).

6. Inspection apparatus (1) according to at least one of the preceding claims, wherein the camera (3) is a black/white or a color camera and/or has at least 2 megapixels, in particular at least 4 megapixels.

7. Inspection apparatus (1) according to at least one of the preceding claims, wherein the camera (3) has a changeable picture read-out area (field of view).

8. Inspection apparatus (1) according to at least one of the preceding claims, wherein an optical axis (O) of the camera (3) is inclined in a range of 5° to 15° relative to the surface normal (N) of the light exit surface (6).

9. Inspection apparatus (1) according to at least one of the preceding claims, wherein a mirror cabinet is arranged between the camera (3) and the illumination device (5).

10. Transmitted light inspection method for a container (2) comprising a container body and a container mouth region (2a), wherein at least a partial region of the container (2) is transilluminated by an illumination device (5) with a light exit surface (6) and is captured by at least one camera (3),
**characterized in that**
a camera picture of the container body is taken, wherein at least one partial region (6c) of the light exit surface (6) associated with the container body is switched on, and
a camera picture of the container mouth region (2a) is taken, wherein at least one partial region (6b) associated with the container mouth region (2a) is switched on and at least one partial region (6a, 6c) adjacent thereto in the longitudinal direction of the container is switched off.

11. Transmitted light inspection method according to claim 10, wherein the container body is at least partially outside the field of view of the camera when the picture of the container mouth region (2a) is taken.

12. Transmitted light inspection method according to claim 10 or 11, wherein, when taking a picture of the container mouth region (2a), a first adjacent partial region (6a) is switched on and a second adjacent partial region (6c) is switched off and, when taking a further picture of the container mouth region (2a), the adjacent partial regions (6a, 6c) are switched in reverse correspondingly.

13. Transmitted light inspection method according to one of claims 10 to 12, wherein the at least one adjacent partial region (6a, 6c) is arranged in the camera field of vision in the longitudinal direction of the container above and/or below the container mouth region (2a).

14. Transmitted light inspection method according to one of claims 10 to 13, wherein, when taking a picture of the container body, all partial regions (6a - 6c) of the light exit surface (6) are switched on.

## Revendications

1. Dispositif d'inspection (1) pour l'inspection de récipients (2) par lumière transmise, avec au moins une caméra (3) et un dispositif d'éclairage (5), la caméra (3) étant orientée avec son champ de vision de telle sorte qu'elle détecte une surface de sortie de lumière (6) du dispositif d'éclairage (5), le dispositif d'inspection (1) comprend un dispositif de subdivision (7) la surface de sortie de la lumière (6) en au moins deux zones partielles (6a - 6c) séparées essentiellement horizontalement, qui peuvent être activées et désactivées au choix pour l'inspection de la paroi latérale et de la tête de fermeture du récipient,
**caractérisé en ce que**
le dispositif de subdivision (7) est conçu de telle manière qu'au moins une des zones partielles (6a, 6c) est désactivée pour l'inspection de la tête de fermeture, la zone partielle désactivée (6a, 6c) étant disposée dans le champ de vision de la caméra dans la direction longitudinale du récipient, à côté de la zone de l'embouchure du récipient (2a) pendant l'inspection.

2. Dispositif d'inspection (1) selon la revendication 1, dans lequel un dispositif de déclenchement est prévu pour déclencher l'enregistrement d'au moins deux images de caméra pendant le transport du récipient et la commutation d'au moins une zone partielle (6a - 6c) entre les enregistrements.

3. Dispositif d'inspection (1) selon au moins l'une des revendications précédentes, le dispositif de subdivision (7) étant conçu pour être commutable de telle sorte que la surface de sortie de la lumière (6) pour l'inspection de la paroi latérale s'éclaire complètement.

4. Dispositif d'inspection (1) selon au moins l'une des revendications précédentes, le dispositif de subdivision (7) comprenant un élément de membrane (9, 10) qui est conçu comme une membrane (9) mobile mécaniquement ou comme un élément à cristaux liquides (10).

5. Dispositif d'inspection (1) selon au moins l'une des revendications précédentes, le dispositif de subdivision (7) comprenant des zones de rayonnement (8a - 8c) de la surface de sortie de la lumière (6) commutables individuellement.

6. Dispositif (1) selon au moins l'une des revendications précédentes, la caméra (3) étant une caméra noir/blanc ou couleur et/ou ayant au moins 2 mégapixels, en particulier au moins 4 mégapixels.

7. Dispositif d'inspection (1) selon au moins l'une des revendications précédentes, la caméra (3) ayant une zone de lecture d'image (champ de vision) modifiable.

8. Dispositif d'inspection (1) selon au moins l'une des revendications précédentes, dans lequel un axe optique (O) de la caméra (3) est incliné dans une plage de 5° à 15° par rapport à la normale (N) de la surface de sortie de la lumière (6).

9. Dispositif d'inspection (1) selon au moins l'une des revendications précédentes, dans lequel une armoire de toilette est disposée entre la caméra (3) et le dispositif d'éclairage (5).

10. Procédé d'inspection en lumière transmise pour un récipient (2) avec un corps de récipient et une zone d'embouchure de récipient (2a), dans lequel au moins une zone partielle du récipient (2) est éclairée par transparence par un dispositif d'éclairage (5) avec une surface de sortie de lumière (6) et est détectée par au moins une caméra (3),
**caractérisé en ce que**
une image de caméra du corps du récipient est prise, dans lequel au moins une zone partielle (6c) de la surface d'émission de lumière (6) associée au corps du récipient est mise en marche, et
une image de caméra de la zone d'embouchure du récipient (2a) est prise, dans lequel au moins une zone partielle (6b) associée à la zone d'embouchure du récipient (2a) est activée et au moins une zone partielle (6a, 6c) dans la direction longitudinale du récipient est désactivée.

11. Procédé d'inspection en lumière transmise selon la revendication 10, dans lequel le corps du récipient est au moins partiellement en dehors du champ de vision de la caméra lorsque la zone de l'embouchure du récipient (2a) est photographiée.

12. Procédé d'inspection par transmission de lumière selon la revendication 10 ou 11, dans lequel, lorsque la zone (2a) de l'embouchure du récipient est photographiée, une première zone partielle adjacente (6a) est activée et une deuxième zone partielle adjacente (6c) est désactivée et, lorsque la zone (2a) de l'embouchure du récipient est photographiée plus en détail, les zones partielles adjacentes (6a, 6c) sont commutées en conséquence en sens inverse.

13. Procédé d'inspection par lumière transmise selon l'une des revendications 10-12, dans lequel ladite au moins une zone partielle adjacente (6a, 6c) est disposée dans le champ de vision de la caméra dans la direction longitudinale du récipient au-dessus et/ou au-dessous de la zone d'embouchure du récipient (2a).

14. Procédé d'inspection par lumière transmise selon l'une des revendications 10-13, dans lequel toutes les zones partielles (6a - 6c) de la surface de sortie de la lumière (6) sont allumées lorsque le corps du récipient est ramassé.
